# EUROPÄISCHE PATENTSCHRIFT

(11) **EP 2 262 985 B1**
(45) Veröffentlichungstag und Bekanntmachung des Hinweises auf die Patenterteilung: **14.03.2012**
(21) Anmeldenummer: 09718922.9
(22) Anmeldetag: 21.01.2009
(51) Int. Cl.: F01N 3/20

(54) **ABGASVORRICHTUNG EINER BRENNKRAFTMASCHINE**
EXHAUST GAS DEVICE OF AN INTERNAL COMBUSTION ENGINE
DISPOSITIF POUR GAZ D'ÉCHAPPEMENT D'UN MOTEUR À COMBUSTION INTERNE

(30) Priorität: 10.03.2008 DE 102008013405
(43) Veröffentlichungstag der Anmeldung: 22.12.2010
(73) Patentinhaber: Robert Bosch GmbH, 70442 Stuttgart (DE)
(72) Erfinder: RAATZ, Thorsten, 71701 Schwieberdingen (DE)
(86) Internationale Anmeldenummer: PCT/EP2009/050655
(87) Internationale Veröffentlichungsnummer: WO 2009/112295

(56) Entgegenhaltungen:
- WO-A-2006/010506
- DE-A1- 10 243 270
- DE-A1- 19 529 835
- DE-A1-102005 035 555
- JP-A- 2007 023 997
- US-A1- 2005 091 968

## Beschreibung

Die Erfindung betrifft eine Abgasvorrichtung einer Brennkraftmaschine, insbesondere einer Brennkraftmaschine mit Benzindirekteinspritzung, mit mindestens einem Selektivkatalysator.

### Stand der Technik

Der Kraftstoffverbrauch von Ottomotoren, insbesondere von Ottomotoren mit Benzindirekteinspritzung, kann im Teillastbereich mit Hilfe einer Verbrennung mit Luftüberschuss und mittels Ladungsschichtung deutlich gesenkt werden. Durch eine Reduzierung der Ansaugdrosselverluste, eine thermodynamisch günstigere Gaszusammensetzung sowie in bestimmten Bereichen durch Verringerung der Wandwärmeverluste lassen sich hier deutliche Verbrauchsvorteile im untersten Lastbereich (teilweise über 30%) und im relevanten NEFZ-Fahrzyklus erreichen. Allerdings wird durch die magere Gemischzusammensetzung eine erwünschtermaßen hohe Reduktion von Stickoxyden im Dreiwege-Katalysator verhindert, weshalb zur Erreichung günstiger Abgaswerte spezielle NOₓ-Speicher-Systeme/DeNOx-Katalysatoren eingesetzt werden. Diese setzen einen schwefelarmen Kraftstoff voraus, der aber nicht weltweit flächendeckend verfügbar ist und dadurch den Einsatz in bestimmten Märkten einschränkt. Ferner wird der durch Ladungsschichtung erzielte Wirkungsgradvorteil durch die erforderliche Regeneration des DeNOx-Katalysators reduziert, wobei zusätzliche Kostennachteile im Vergleich zu herkömmlichen Abgasnachbehandlungssystemen bestehen.

Eine wirksame Methode, in sauerstoffhaltigen Abgasen Stickoxyde (NOₓ) zu entfernen, ist die Möglichkeit, diese Stickoxyde über eine selektive katalytische Reaktion (SCR = Selective Catalyc Reduction) zu Stickstoff und zu Wasser zu reduzieren. Als Reduktionsmittel findet hier Ammoniak (NH₃) Anwendung, das bei mobilen Anwendungen aus Sicherheitsgründen nur in geringen Mengen im Fahrzeug mitgeführt wird und hierbei aus einem NH"r-ZvAschenspeicher wie beispielsweise einer Harnstoff-Wasser-Lösung (HWL beziehungsweise AdBlue) oder aus Feststoffen, beispielsweise Ammoniumcarbamat, Ammoniumcarbonat und Ähnlichen in kleinen Mengen bedarfsgerecht freigesetzt und dem Abgas zudosiert wird. Im Diesel-Nutzfahrzeugaegment sind derartige Systeme bereits im Einsatz.

Derartige Systeme sind jedoch in Ottomotoren, insbesondere in solchen mit Benzindirekteinspritzung, aufgrund fehlender Hochtemperaturbeständigkeit der Selektivkatalysatoren nicht einsetzbar. Weiter wird der selektivkatalytische Prozess durch die in den Abgasen von Ottomotoren vorhandenen Kohlenwasserstoffen empfindlich gestört. Gerade bei hoher Last werden benzindirekteinspritzende Motoren nicht mager betrieben, sondern mit einem sogenannten stöchiometrischen Luftverhältnis (λ = 1-Konzept) mit der Folge relativ hoher Stickoxyd- und Kohlenwasserstoff-Emissionen. Ebenfalls im λ = 1-Betrieb erfolgt der Kaltstart, um Verbrennungsaussetzer bei kalten Motortemperaturen zu vermeiden.

Die DE 10243270 beschreibt eine Zufuhr eines Reduktionsmittels in den Abgastrakt einer Brennkraftmaschine, der einen Oxidationskatalysator und einen nachgeordneten SCR-Katalysator aufweist, wobei die Zufuhr wahlweise vor dem Oxidationskatalysator oder zwischen dem Oxidationskatalysator und dem SCR-Katalysator stattfinden kann.

Die DE 19529835 zeigt eine einem Dreiwegekatalysator vorgeordnete Parallelschaltung eines Startkatalysators mit einem SCR-Katalysator.

### Offenbarung der Erfindung

Aufgabe der Erfindung ist es, eine selektivkatalytische Aufbereitung von Abgasen einer Brennkraftmaschine, insbesondere einer Brennkraftmaschine mit Benzindirekteinspritzung, bereitzustellen, die die genannten Nachteile vermeidet und eine möglichst wirksame Entstickung der Abgase in einem weiten Betriebsbereich ermöglicht.

Hierzu wird eine Abgasvorrichtung einer Brennkraftmaschine, insbesondere einer Brennkraftmaschine mit Benzindirekteinspntzung, mit mindestens einem Selektivkatalysator vorgeschlagen, wobei vorgesehen ist, dass dem Selektivkatalysator ein erster Katalysator vorgeschaltet ist. Der dem Selektivkatalysator vorgeschaltete erste Katalysator entfernt aus dem Abgas die für den Selektivkatalysator schädlichen Kohlenwasserstoff-Bestandteile des Abgases und bei λ = 1 auch CO- und NOₓ-Bestandteile, so dass eine gute Abgasreinigung von Beginn an erzielt wird. Der erste Katalysator ist hierbei in besonders vorteilhafter Art und Weise als ein Dreiwege-Katalysator bekannter

Bauart, jedoch vergleichsweise kompaktem Volumen ausgebildet. In bekannten Dreiwege-Katalysatoren lässt sich eine sehr gute Umsetzung gerade von Kohlenwasserstoff Bestandteilen, CO-Anteilen und Stickoxyden In einem Betriebsbereich erzielen, in dem λ in etwa gleich 1 ist. Bei einer relativ kompakten Bauform dieses ersten Katalysators lässt sich zudem eine schnelle Durchwärmung erreichen, so dass die Wirksamkeit des ersten Katalysators sehr schnell einsetzt. Hierbei ist der erste Katalysator stromaufwärts zu einer Einlassstelle von Reduktionsmittel des Selektivkatalysators angeordnet. Als Reduktionsmittel kommen die bereits erwähnten, aus dem Stand der Technik bekannten Reduktionsmittel wie Ammoniak (NH₃) in den bekannten Darreichungsformen wie beispielsweise Harnstoff-Wasser-Lösung (etwa HWL beziehungsweise AdBlue) in Betracht. Die Entfernung von für die katalytische Reaktion schädlichen Kohlenwasserstoffen kann demzufolge noch vor der Versetzung des zu reinigenden, zu entstickenden Abgases mit dem Reduktionsmittel erfolgen, so dass auch hier unerwünschte Einflüsse ausgeschlossen sind. Dabei ist dem Selektivkatalysator ein zweiter Katalysator nachgeschaltet.

Der zweite Katalysator ist hierbei bevorzugt auch als Dreiwege-Katalysator in bekannter Funktion und Bauweise ausgeführt, wobei dieser als Hauptkatalysator zur Endbehandlung des Abgases dient.

Bevorzugt ist eine Ausführungsform, in der einer Reihenschaltung von erstem Katalysator und Selektivkatalysator eine Volumenstell- und Verschlusseinrichtung parallel geschaltet ist. Die Volumenstell- und Verschlusseinrichtung dient dazu, in der Art eines Bypass den Abgasvolumenstrom durch die aus erstem Katalysator und Selektivkatalysator gebildete Reihenschaltung oder parallel auch an dieser vorbei zu leiten, wobei die Volumenstell- und Verschlusseinrichtung bevorzugt eine stufenlose Verstellung des Abgasvolumenstroms zulässt, so dass der Abgasvolumenstrom ganz durch die Reihenschaltung oder sowohl durch die Reihenschaltung als auch an ihr vorbei in vorzubestimmenden Volumenstromanteilen geführt werden kann. Hierdurch kann vermieden werden, dass der erste Katalysator, der als Kaltstart-Katalysator in bevorzugt motornaher Anordnung zur sehr schnellen Durchwärmung vorliegt, in bestimmten Lastzuständen, in denen ein sehr hoher Abgasvolumenstrom mit hoher Temperatur auftritt, überhitzt wird; ferner kann dadurch verhindert werden, dass der Selektivkatalysator, der dem ersten Katalysator nachgeschaltet ist, in Betriebszuständen belastet wird, in denen dies nicht erforderlich ist.

In einer weiteren bevorzugten Ausführungsform ist einer Parallelschaltung von der Volumenstell- und Verschlusseinrichtung einerseits (dem Bypass) und der Reihenschaltung von erstem Katalysator und Selektivkatalysator andererseits der zweite Katalysator nachgeschaltet. Der zweite Katalysator, der gewissermaßen als Hauptkatalysator betrachtet werden kann, wird demzufolge stets vom gesamten Abgas der Brennkraftmaschine beaufschlagt, wobei der Abgasvolumenstrom in einer Stellung der Volumenstell- und Verschlusseinrichtung von der Brennkraftmaschine überwiegend (aufgrund der Strömungswiderstände) direkt zum zweiten Katalysator geleitet und dort umgesetzt wird, wohingegen in einer anderen Stellung der Volumenstell- und Verschlusseinrichtung der Abgasvolumenstrom zunächst durch den ersten Katalysator (den Kaltstartkatalysator) und den in Reihe hier zugeschalteten Selektivkatalysator geleitet wird, um erst dann dem zweiten Katalysator (dem Hauptkatalysator) zugeführt zu werden. Gerade im Kaltstartbetrieb ist die zuletzt genannte Variante sinnvoll, da durch den motornah verbauten ersten Katalysator, der sich aufgrund seiner motornahen Anordnung sehr schnell erwärmt und wirksam wird, eine sehr gute Entfernung gerade auch von für den nachgeschalteten Selektivkatalysator schädlichen Kohlenwasserstoffen erreicht wird, wobei der Selektivkatalysator bereits bald nach Kaltstart eine sehr gute Entstickung des Abgases erreicht. Bis zu seinem hinreichenden Wirksamwerden wird die Entstickung bereits vom ersten Katalysator als Dreiwege-Katalysator mit bewirkt. Gerade im Kaltstartbetrieb wird die Brennkraftmaschine bei Ottomotoren im λ = 1-Betrieb betrieben, so dass hier ein relativ hoher, vom ersten Katalysator zu entfernender Kohlenwasserstoffanteil im Abgas enthalten ist, und gleichzeitig der motornahe erste Katalysator ausreichend schnell durchwärmt wird, um diese Wirkung schnell zu entfalten. In vorteilhafter Weise wird gerade hierbei auch das Umsetzungsvermögen des Selektivkatalysators verbessert, der für hohe Umsatzraten im kalten Zustand (also beispielsweise bei Temperaturen von weniger als 250°C) bis zu 50% NO₂-Anteil im Abgasvolumenstrom benötigt, um seine volle Wirkung zu entfalten. Da der Abgasvolumenstrom kalter Ottomotoren allerdings relativ wenig NO₂ enthält, kann bei kaltem Selektivkatalysator nicht von vornherein eine solche hohe Umsetzung erzielt werden. In vorteilhafter Weise aber oxydiert der erste Katalysator, der dem Selektivkatalysator in der Reihenschaltung stromaufwärts vorgeschaltet ist, einen Teil des Stickstoffmonoxyds NO zu Stickstoffdioxyd NO₂, so dass auf diese Weise der NO₂-Anteil des dem Selektivkatalysator zugeführten Abgases deutlich erhöht und hierdurch dessen Wirksamkeit in kaltem Zustand beträchtlich verbessert wird. Gleichzeitig werden die gerade in kaltem Zustand des Selektivkatalysators sehr unerwünschten Kohlenwasserstoff-Bestandteile des Abgases durch den ersten Katalysator entfernt, nämlich oxydiert, wodurch wiederum die Umsatzraten des Selektivkatalysators deutlich verbessert werden können. Da der motornahe erste Katalysator schon bei geringen Temperaturen auch Kohlenwasserstoffe und Kohlenmonoxyd umsetzen kann, lässt sich die Aufheizung des stromabwärts nachgeschalteten Selektivkatalysators deutlich beschleunigen, so dass dessen volle Wirksamkeit sehr viel schneller eintritt. Soweit der zweite Katalysator, der Hauptkatalysator, durch diese Bauweisen eventuell in motorfernerer Weise angeordnet werden muss, kann insbesondere im Kaltstart durch den motornah angeordneten ersten Katalysator eine geringfügig geringere Umsetzungsrate des Hauptkatalysators (des zweiten Katalysators) zumindest ausgeglichen, wenn nicht gar ein besseres Ergebnis in Gesamtbetrachtung der Katalysatoranordnung erreicht werden.

In einer anderen Ausführungsform wird der erste Katalysator vom gesamten Abgasstrom/Abgasvolumenstrom der Brennkraftmaschine durchströmt. Anders als in vorstehend beschriebenen Ausführungsbeispielen ist die Anordnung des ersten Katalysators als Kaltstartkalaysator dergestalt, dass er stets vom gesamten Abgasstrom der Brennkraftmaschine durchströmt wird, also nicht durch einen Bypass der Volumenstell- und Verschlusseinrichtung zumindest teilweise aus dem Abgasvolumenstrom herausgenommen wird. Auf diese Weise ist es möglich, den zweiten Katalysator (also Hauptkatalysator in bekannter Dreiwege-Katalysator-Technik) wesentlich kleiner und kostengünstiger auszulegen, wobei sich überdies in vorteilhafterweise Bauraum einsparen lässt, der für einen im Stand der Technik üblichen, großen Dreiwege-Katalysator erforderlich gewesen wäre. Der erste Katalysator mindert hierbei bereits einen großen Teil der Emissionen, so dass der zweite Katalysator nur noch geringere Anteile an Kohlenwasserstoff, Kohlenmonoxyd- und NOₓ-Bestandteilen im Abgas konvertieren muss. Bei sehr hohen Abgastemperaturen ist allerdings auf hinreichende Temperaturbeständigkeit des ersten Katalysators zu achten, wobei beispielsweise durch aktive Bauteilschutzmaßnahmen wie etwa eine Anfettung des Gemisches einer unerwünschten Überhitzung des ersten Katalysators entgegengewirkt werden kann; gleichzeitig bieten sich aus dem Stand der Technik bekannte Entwärmungsmaßnahmen an, die gegebenenfalls bedarfsweise und etwa abhängig von einer durch geeignete Vorrichtungen aufzunehmenden Temperatur des ersten Katalysators zugeschaltet und wieder abgeschaltet werden können. Soweit Maßnahmen wie etwa Gemischanfettung verwendet werden, ist dies vorzugsweise in solchen Betriebszuständen vorzusehen, in denen die Gemischanfettung ohnehin im Stand der Technik üblich ist, um beispielsweise andere Bauteile wie etwa Krümmer oder Abgasturbolader vor Überhitzung zu schützen. Da im Gegensatz zu vorbeschriebenen Ausführungsformen vor dem ersten Katalysator keine Verzweigung im Abgasstrang vorzusehen ist, kann der erste Katalysator sehr motornah verbaut werden, so dass ein extrem schnelles Aufheizen auch im Kaltstart und höhere Betriebstemperaturen auch im niedrigen Lastbereich erreicht werden.

In einer weiteren bevorzugten Ausführungsform ist eine Reihenschaltung vom ersten Katalysator und einer Schaltungsanordnung vorgesehen, die von einer Parallelschaltung der Volumenstell- und Verschlusseinrichtung und dem Selektivkatalysator gebildet wird. Der erste Katalysator ist folglich, wie vorstehend beschrieben, motornah angeordnet und vom gesamten Abgasstrom der Brennkraftmaschine durchströmt. Ihm in Reihe nachgeschaltet ist eine Parallelschaltung, die aus dem Selektivkatalysator und der diesem parallel geschalteten Volumenstell- und Verschlusseinrichtung gebildet wird. Der Selektivkatalysator wird demzufolge von dem Abgasvolumenstrom durchströmt in Abhängigkeit von den Leitungsquerschnitten der ihn anbindenden Verrohrung des Abgasstrangs und der Stellung der Volumenstell- und Verschlusseinrichtung. Die Volumenstell- und Verschlusseinrichtung kann hierbei ganz geschlossen, ganz geöffnet oder in einer Zwischenstellung sein. Abhängig vom jeweiligen Strömungswiderstand, der sich aus der Stellung der Volumenstell- und Verschlusseinrichtung und aus der Verrohrung des Abgasstranges ergibt, wird ein mehr oder minder großer Anteil des Abgasvolumenstroms über den Selektivkatalysator oder an ihm vorbeigeleitet. Hier lassen sich, abhängig von der Ausgestaltung und den Anforderungen der jeweiligen Brennkraftmaschine und auch von den hinsichtlich der Abgasreinigung erwünschten Ergebnissen, eine Vielzahl von Ausgestaltungen hinsichtlich der anteiligen Durchströmung vorsehen.

In einer weiteren bevorzugten Ausführungsform ist dieser Reihenschaltung der zweite Katalysator nachgeschaltet. Stromabwärts der vorstehend beschriebenen Schaltungsanordnung ist demzufolge der zweite Katalysator angeordnet, wobei dieser nicht mehr zwingend als volumenstarker Hauptkatalysator ausgebildet sein muss, da ein wesentlicher Anteil der Dreiwege-Reaktion im ersten Katalysator erfolgt, da dieser stets vom gesamten Abgasvolumenstrom der Brennkraftmaschine durchströmt wird.

In einer weiteren, bevorzugten Ausführungsform weist der erste Katalysator eine Reaktionsschicht auf, die aus den Elementen Platin oder Rhodium oder aus einer Kombination oder Verbindung beider Elemente besteht und/oder diese Elemente und/oder Verbindungen dieser Elemente aufweist. In dieser Ausführungsform kann sehr vorteilhaft sichergestellt werden, dass der NO₂-Anteil im mageren Betrieb hinreichend angehoben wird, um den Selektivkatalysator sehr schnell wirksam werden zu lassen. Anders als die im Stand der Technik bekannte, herkömmliche Dreiwege-Katalysator-Beschichtung (etwa Palladium/Rhodium) wird hier eine Reaktionsschicht mit den Elementen Platin und/oder Rhodium verwendet, die in vorteilhafter Weise eine Anhebung des NO₂-Anteils im mageren Betrieb vor dem Selektivkatalysator ermöglicht.

Weiter wird ein Verfahren zur Abgasreinigung von Abgas einer Brennkraftmaschine vorgeschlagen, insbesondere einer Brennkraftmaschine mit Benzindirekteinspritzung, insbesondere zum Verwenden bei einer Abgasvorrichtung, wie vorstehend beschrieben, mit mindestens einem Selektivkatalysator. Hierbei ist vorgesehen, dass dem Selektivkatalysator ein erster Katalysator vorgeschaltet wird. Die Vorschaltung des ersten Katalysators erfolgt hierbei in fixer Anordnung oder auch so, dass über eine Volumenstell-und Verschlusseinrichtung die anteilige Durchströmung des ersten Katalysators entweder ständig oder aber bedarfsweise regelbar ist.

Weitere vorteilhafte Ausführungsformen ergeben sich aus den Unteransprüchen und aus Kombinationen derselben.

### Kurze Beschreibung der Zeichnungen

Die Erfindung wird nachfolgend anhand von zwei Ausführungsbeispielen näher erläutert.

Es zeigen
- Figur 1: eine Abgasvorrichtung mit Parallelschaltung einer Volumenstell-und Verschlusseinrichtung mit einer Reihenschaltung von erstem Katalysator und Selektivkatalysator und
- Figur 2: eine Abgasvorrichtung mit einer Reihenschaltung des ersten Katalysators mit einer Schaltungsanordnung, die von einer Parallelschaltung aus Volumenstell- und Verschlusseinrichtung und Selektivkatalysator gebildet ist.

### Ausführungsform(en) der Erfindung

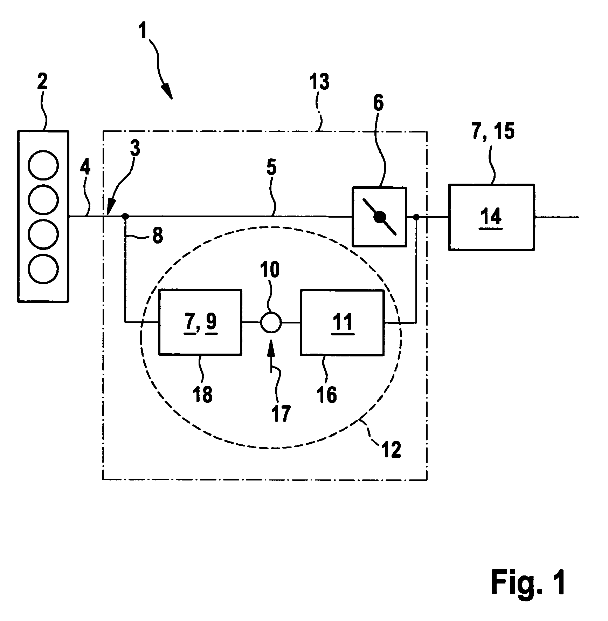

Figur 1 zeigt eine Abgasvorrichtung 1 einer Brennkraftmaschine 2 in symbolisch vereinfachter Darstellung.

In einem motomahen Bereich 3 teilt sich ein Abgasstrang 4 auf, wobei in einem Hauptzweig 5 eine Volumenstell- und Verschlusseinrichtung 6 angeordnet ist, und in einen Selektivzweig 8, der in Reihenschaltung einen ersten Katalysator 9, diesem stromabwärts eine Einlassstelle 10 für nicht dargestelltes Reduktionsmittel und den stromabwärts nachgeschalteten Selektivkatalysator 11 aufweist. Der erste Katalysator 9 ist ein Dreiwegekatalysator 7. Die aus dem ersten Katalysator 9, der Einlassstelle 10 und dem Selektivkatalysator 11 ausgebildete Reihenschaltung 12 mündet stromabwärts der Volumenstell- und Verschlusseinrichtung 6 in den Hauptzweig 5 ein, wobei sie mit der Volumenstell- und Verschlusseinrichtung 6 eine Parallelschaltung 13 ausbildet. Der Parallelschaltung 13 nachgeschaltet ist ein zweiter Katalysator 14, der als Hauptkatalysator 15 ausgebildet ist und ein Dreiwegekatalysator 7 ist. Abhängig von der Stellung der Volumenstell- und Verschlusseinrichtung 6 wird der Abgasstrom der Brennkraftmaschine 2 durch den Hauptzweig 5 und durch den Selektivzweig 8 geleitet, oder, bei geschlossener Volumenstell- und Verschlusseinrichtung 6, nur durch den Selektivzweig 8. Der Selektivkatalysator 11 im Selektivzweig 8 ist ein sogenannter DeNOx-Katalysator 16, der selektiv die Reduktion von Stickoxyden unter Zugabe eines Reduktionsmittels 17 (beispielsweise Harnstofflösung/Ammoniakgas/AdBlue) an der Einlassstelle 10 vornimmt. Der erste Katalysator 9 ist als Kaltstartdreiwegekatalysator 18 ausgebildet, der in bevorzugt motornaher Bauweise, also insbesondere im motornahen Bereich 3, einer sehr schnellen Erwärmung und Erreichung seiner Betriebstemperatur unterliegt und somit sehr schnell wirksam wird. In vorteilhafter Weise werden hierbei schädliche Kohlenwasserstoffe sehr schnell aus dem Abgasstrom entfernt, die für den nachfolgenden Selektivkatalysator 11 schädlich wären. Gerade im Kaltstartbetrieb wird bei Ottomotoren im λ = 1-Betrieb verfahren, wodurch eine rasche Aufheizung des ersten Katalysators 9 (des Kaltstartdreiwegekatalysators 18) bei sehr schneller Entfernung von CO-, NOₓ- und Kohlenwasserstoffanteilen im Abgasstrom erreicht wird. Das Umsetzungsvermögen des nachfolgenden Selektivkatalysators 11 als DeNOx-Katalysator 16 wird hierbei ebenfalls in vorteilhafter Weise verbessert, da dieser für hohe Umsatzraten im kalten Zustand, beispielsweise bei Temperaturen von unter 250°C, bis zu 50% NO₂-Anteil im Abgasvolumenstrom benötigt, um seine volle Wirkung zu entfalten. In dem vorgeschalteten Kaltstartdreiwegekatalysator 18 wird vorteilhaft der im Abgasstrom der kalten Brennkraftmaschine 2 enthaltene hohe Anteil von Stickstoffmonoxyd zu Stickstoffdioxyd NO₂ oxydiert, so dass eine Erhöhung des NO₂-Anteils des Abgasstroms bei Zuführung zum Selektivkatalysator 11 erfolgt. Auf diese Weise wird in der Reihenschaltung 12 von Kaltstartdreiwegekatalysator 18 und Selektivkatalysator 11 bereits eine sehr hohe Umsetzungsrate und gute Abgasreinigung erzielt. Der nachfolgende zweite Katalysator 14, als Hauptkatalysator 15, erwärmt sich langsamer als der erste Katalysator 9, was aber insoweit durch die sehr gute Wirksamkeit der Reihenschaltung 12, wie vorstehend beschrieben, kompensiert wird. Gerade im Kaltstartbetrieb wird demzufolge die Volumenstell- und Verschlusseinrichtung 6 in eine geschlossene bis nur teilweise geöffnete Stellung gebracht, um einen großen Anteil des Abgasstroms durch den Kaltstartdreiwegekatalysator 18 und den nachfolgenden Selektivkatalysator 11 zu leiten. Erst mit zunehmender Erwärmung der Brennkraftmaschine 2 und des zweiten Katalysators 14 wird die Volumenstell- und Verschlusseinrichtung weiter geöffnet, um einer Überhitzung des ersten Katalysators 9 vorzubeugen und eine Durchströmung des Selektivkatalysators 11 in Betriebszuständen, in denen eine sehr gute Umsetzung im zweiten Katalysator 14 als Hauptkatalysator 15 erreicht wird, zu umgehen. Auf diese Weise kann in sehr vorteilhafter Verfahrensweise eine sehr gute Abgasreinigung in allen Betriebszuständen der Brennkraftmaschine 2 erreicht werden.

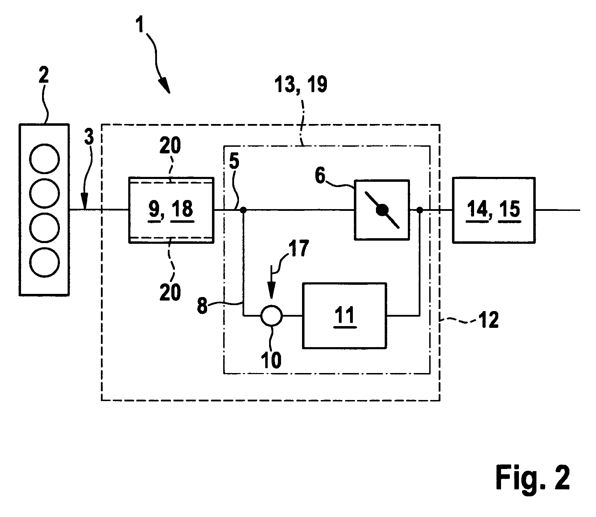

Figur 2 zeigt die Brennkraftmaschine 2 mit einer anderen Anordnung der Abgasvorrichtung 1, nämlich einer Reihenschaltung 12 aus dem ersten Katalysator 9, der wiederum im motomahen Bereich 3 verbaut ist, und einer Schaltungsanordnung 19, die von einer Parallelschaltung 13 der Volumenstell- und Verschlusseinrichtung 6 und dem Selektivkatalysator 11 gebildet ist. Dem Selektivkatalysator 11 ist innerhalb der Schaltungsanordnung 19 stromaufwärts die Einlassstelle 10 vorgeschaltet, durch die Reduktionsmittel 17 dem Abgasstrom vor dem Selektivkatalysator 11 zugegeben wird. Der Reihenschaltung 12 stromabwärts nachgeschaltet ist der zweite Katalysator 14 als Hauptkatalysator 15. Bei dieser Anordnung wird der erste Katalysator 9 als Kaltstartdreiwegekatalysator 18 ständig vom gesamten Abgasstrom der Brennkraftmaschine 2 durchströmt. Der Selektivkatalysator 11 wird in Abhängigkeit von den Leitungsquerschnitten des Hauptzweigs 5 und des Selektivzweigs 8, wobei letzterer den Selektivkatalysator 11 und die Einlassstelle 10 innerhalb der Parallelschaltung 13 aufweist, vom Abgasstrom der Brennkraftmaschine 2 durchströmt. In dieser Anordnung der Abgasvorrichtung 1 kann der Hauptkatalysator 15 wesentlich kleiner und kostengünstiger ausgelegt werden, da auch im λ = 1-Modus der gesamte Abgasstrom bereits vom Kaltstartdreiwegekatalysator 18 vorgereinigt wird, der schon einen großen Teil der Umsetzung vornimmt, wodurch beim Hauptkatalysator 15 geringere Kohlenwasserstoff-, Kohlenmonoxyd- und NOx-Konzentrationen zur Umsetzung anstehen. In dieser Anordnung der Abgasvorrichtung 1 ist eine besonders motornahe Anbindung des Kaltstartdreiwegekatalysators 18 möglich, wodurch eine besonders schnelle Aufheizung im Kaltstart und auch höhere Arbeitstemperaturen auch im niedrigen Lastbereich erreicht werden können.

Die als Katalysatorüberhitzungsschutz häufig angewendete Gemischanfettung (λ < 1) kann zum Schutz vor Überhitzung des Kaltstartdreiwegekatalysators 18 vorteilhaft angewandt werden; in einer etwas motorferneren Verbauung, wie beispielsweise in Figur 1 beschrieben, kann auf diese Form des Katalysatorüberhitzungsschutzes in bestimmten Bauformen auch völlig verzichtet werden.

Der erste Katalysator 9 wird bevorzugt mit einer Reaktionsschicht 20 versehen, die aus den Elementen Platin und/oder Rhodium oder aus Kombination dieser Elemente besteht und/oder oder diese Elemente aufweist, um den NO₂-Anteil des Abgasstroms stromaufwärts des Selektivkatalysators 11 vorteilhaft zu erhöhen; eine solche vorteilhafte Erhöhung des NO₂-Anteils kann eine aus dem Stand der Technik bekannte, gewöhnliche Palladium/Rhodium-Schicht nicht in der gewünschten Art und Weise bewirken.

## Patentansprüche

1. Abgasvorrichtung einer Brennkraftmaschine, insbesondere einer Brennkraftmaschine mit Benzindirekteinspritzung, mit mindestens einem Selektivkatalysator, wobei dem Selektivkatalysator (11) ein erster Katalysator (9) vorgeschaltet ist, wobei der erste Katalysator (9) stromaufwärts zu einer Einlassstelle (10) von Reduktionsmittel (17) des Selektivkatalysators (11) angeordnet ist, und wobei dem Selektivkatalysator (11) ein zweiter Katalysator (14) nachgeschaltet ist, **dadurch gekennzeichnet, dass** der erste Katalysator (9) ein Dreiwegekatalysator (7, 18) ist und dass mittels einer Volumenstell- und Verschlusseinrichtung (6) der Abgasanteil eingestellt werden kann, der vor der Behandlung im zweiten Katalysator (14) den Selektivkatalysator (11) durchläuft.

2. Abgasvorrichtung nach einem der vorhergehenden Ansprüche, **dadurch gekennzeichnet, dass** die Volumenstell- und Verschlusseinrichtung (6) einer Reihenschaltung (12) von erstem Katalysator (9) und Selektivkatalysator (11) parallel geschaltet ist.

3. Abgasvorrichtung nach einem der vorhergehenden Ansprüche, **dadurch gekennzeichnet, dass** einer Parallelschaltung (13) von der Volumenstell- und Verschlusseinrichtung (6) einerseits und der Reihenschaltung (12) von erstem Katalysator (9) und Selektivkatalysator (11) andererseits, der zweite Katalysator (14) nachgeschaltet ist.

4. Abgasvorrichtung nach Anspruch 1 oder 2, **dadurch gekennzeichnet, dass** der erste Katalysator (9) vom gesamten Abgasstrom der Brennkraftmaschine (2) durchströmt wird.

5. Abgasvorrichtung nach Anspruch 4, **gekennzeichnet durch** eine Reihenschaltung (13) vom ersten Katalysator (9) und einer Schaltungsanordnung, die von einer Parallelschaltung (13) der Volumenstell- und Verschlusseinrichtung (6) und dem Selektivkatalysator (11) gebildet ist.

6. Abgasvorrichtung nach Anspruch 5, **dadurch gekennzeichnet, dass** der Reihenschaltung (13) der zweite Katalysator (14) nachgeschaltet ist.

7. Abgasvorrichtung nach einem der vorhergehenden Ansprüche, **dadurch gekennzeichnet, dass** ein Katalysator eine Reaktionsschicht (20) aufweist, die aus den Elementen Platin oder Rhodium oder aus einer Kombination beider Elemente besteht und/oder diese Elemente aufweist

8. Verfahren zur Abgasreinigung von Abgas einer Brennkraftmaschine, insbesondere einer Brennkraftmaschine mit Benzindirekteinspritzung, wobei mindestens ein Selektivkatalysator (11) und ein erster dem Selektivkatalysator (11) vorgeschalteter Katalysator (9) verwendet wird, wobei der erste Katalysator (9) stromaufwärts zu einer Einlassstelle (10) von Reduktionsmittel (17) des Selektivkatalysators (11) angeordnet ist, und wobei dem Selektivkatalysator (11) ein zweiter Katalysator (14) nachgeschaltet ist, **dadurch gekennzeichnet, dass** der erste Katalysator (9) ein Dreiwegekatalysator (7,18) ist und dass der Abgasanteil eingestellt wird, der vor der Behandlung im zweiten Katalysator (14) den Selektivkatalysator (11) durchläuft.

## Claims

1. Exhaust-gas device of an internal combustion engine, in particular of an internal combustion engine with gasoline direct injection, having at least one selective catalytic converter, wherein a first catalytic converter (9) is positioned upstream of the selective catalytic converter (11), wherein the first catalytic converter (9) is arranged upstream of an inlet point (10) for reducing agent (17) for the selective catalytic converter (11), and wherein a second catalytic converter (14) is positioned downstream of the selective catalytic converter (11), **characterized in that** the first catalytic converter (9) is a three-way catalytic converter (7, 18) and **in that** the proportion of exhaust gas which passes through the selective catalytic converter (11) before being treated in the second catalytic converter (14) can be adjusted by means of a volume adjusting and shut-off device (6).

2. Exhaust-gas device according to Claim 1, **characterized in that** the volume adjusting and shut-off device (6) is connected in parallel with a series connection (12) of the first catalytic converter (9) and selective catalytic converter (11).

3. Exhaust-gas device according to one of the preceding claims, **characterized in that** the second catalytic converter (14) is positioned downstream of a parallel connection (13) of firstly the volume adjusting and shut-off device (6) and secondly the series connection (12) of the first catalytic converter (9) and selective catalytic converter (11).

4. Exhaust-gas device according to Claim 1 or 2, **characterized in that** the entire exhaust-gas flow from the internal combustion engine (2) flows through the first catalytic converter (9).

5. Exhaust-gas device according to Claim 4, **characterized by** a series connection (13) of the first catalytic converter (9) and a connection arrangement formed by a parallel connection (13) of the volume adjusting and shut-off device (6) and the selective catalytic converter (11).

6. Exhaust-gas device according to Claim 5, **characterized in that** the second catalytic converter (14) is connected downstream of the series connection (13).

7. Exhaust-gas device according to one of the preceding claims, **characterized in that** a catalytic converter has a reaction layer (20) which is composed of the elements platinum or rhodium or of a combination of both elements and/or has said elements.

8. Method for the purification of exhaust gas of an internal combustion engine, in particular of an internal combustion engine with gasoline direct injection, wherein use is made of at least one selective catalytic converter (11) and of a first catalytic converter (9) connected upstream of the selective catalytic converter (11), wherein the first catalytic converter (9) is arranged upstream of an inlet point (10) for reducing agent (17) for the selective catalytic converter (11), and wherein a second catalytic converter (14) is positioned downstream of the selective catalytic converter (11), **characterized in that** the first catalytic converter (9) is a three-way catalytic converter (7, 18) and **in that** the proportion of exhaust gas which passes through the selective catalytic converter (11) before being treated in the second catalytic converter (14) is adjusted.

## Revendications

1. Dispositif de gaz d'échappement d'un moteur à combustion interne, en particulier d'un moteur à combustion interne avec injection directe d'essence, comprenant au moins un catalyseur sélectif, un premier catalyseur (9) étant monté avant le catalyseur sélectif (11), le premier catalyseur (9) étant disposé en amont par rapport à un point d'admission (10) d'agent réducteur (17) du catalyseur sélectif (11), et un deuxième catalyseur (14) étant monté en aval du catalyseur sélectif (11), **caractérisé en ce que** le premier catalyseur (9) est un catalyseur à trois voies (7, 18) et **en ce que** la proportion de gaz d'échappement qui passe à travers le catalyseur sélectif (11) avant le traitement dans le deuxième catalyseur (14) peut être ajustée au moyen d'un dispositif de réglage et de fermeture de volume (6).

2. Dispositif de gaz d'échappement selon la revendication 1, **caractérisé en ce que** le dispositif de réglage et de fermeture de volume (6) est monté en parallèle avec un branchement en série (12) du premier catalyseur (9) et du catalyseur sélectif (11).

3. Dispositif de gaz d'échappement selon l'une quelconque des revendications précédentes, **caractérisé en ce que** le deuxième catalyseur (14) est monté en aval d'un branchement en parallèle (13) du dispositif de réglage et de fermeture de volume (6) d'une part et d'un branchement en série (12) du premier catalyseur (9) et du catalyseur sélectif (11) d'autre part.

4. Dispositif de gaz d'échappement selon la revendication 1 ou 2, **caractérisé en ce que** le premier catalyseur (9) est parcouru par l'ensemble du courant de gaz d'échappement du moteur à combustion interne (2).

5. Dispositif de gaz d'échappement selon la revendication 4, **caractérisé par** un branchement en série (13) du premier catalyseur (9) et d'un agencement de branchement qui est formé par un branchement en parallèle (13) du dispositif de réglage et de fermeture de volume (6) et du catalyseur sélectif (11).

6. Dispositif de gaz d'échappement selon la revendication 5, **caractérisé en ce que** le deuxième catalyseur (14) est monté en aval du branchement en série (13).

7. Dispositif de gaz d'échappement selon l'une quelconque des revendications précédentes, **caractérisé en ce qu'**un catalyseur présente une couche réactive (20) qui se compose des éléments platine ou rhodium ou d'une combinaison de ces deux éléments et/ou présente ces éléments.

8. Procédé de purification des gaz d'échappement d'un moteur à combustion interne, en particulier d'un moteur à combustion interne à injection directe d'essence, dans lequel au moins un catalyseur sélectif (11) et un premier catalyseur (9) monté avant le catalyseur sélectif (11) sont utilisés, le premier catalyseur (9) étant disposé en amont par rapport à un point d'admission (10) d'agent réducteur (17) du catalyseur sélectif (11), et un deuxième catalyseur (14) étant monté en aval du catalyseur sélectif (11), **caractérisé en ce que** le premier catalyseur (9) est un catalyseur à trois voies (7, 18) et **en ce que** la proportion de gaz d'échappement qui passe à travers le catalyseur sélectif (11) avant le traitement dans le deuxième catalyseur (14) peut être ajustée.
